# EUROPÄISCHE PATENTSCHRIFT

(11) **EP 0 836 033 B1**
(45) Veröffentlichungstag und Bekanntmachung des Hinweises auf die Patenterteilung: **19.11.2003**
(21) Anmeldenummer: 97114534.7
(22) Anmeldetag: 22.08.1997
(51) Int. Cl.: F16F 13/08

(54) **Lager zur Abstützung eines schwingungsfähigen Aggregates**
Support for a vibrating power unit
Support pour une unité motrice vibratoire

(30) Priorität: 11.10.1996 DE 19641938
(43) Veröffentlichungstag der Anmeldung: 15.04.1998
(73) Patentinhaber: Bayerische Motoren Werke Aktiengesellschaft, 80788 München (DE)
(72) Erfinder: Klanner, Martin, 81249 München (DE); Rötsch, Karl, 85229 Markt Indersdorf (DE); Aschenbrenner, Siegfried, 80939 München (DE)

(56) Entgegenhaltungen:
- EP-A- 0 187 188
- EP-A- 0 622 560
- EP-A- 0 784 163
- FR-A- 2 340 834
- US-A- 3 919 509
- US-A- 4 854 562
- PATENT ABSTRACTS OF JAPAN vol. 018, no. 432 (M-1654), 11. August 1994 & JP 06 129462 A (BRIDGESTONE CORP), 10. Mai 1994

## Beschreibung

Die Erfindung betrifft ein Lager zur Abstützung eines schwingungsfähigen Aggregates, insbesondere eines Motors und/oder eines Getriebes eines Kraftfahrzeuges, wobei das Lager relativ starre, elektrisch leitfähige Anschlüsse zur Befestigung der daran zu verbindenden Bauteile aufweist, sowie mit einem zwischen den Anschlüssen ausgebildeten Dämpfungsbauteil, wobei die Anschlüsse des Lagers über einen elektrischen Strom-Leiter miteinander verbunden sind.

Die bekannten Lager zur Abstützung schwingungsfähiger Aggregate dienen nur zur Lagerung eines bzw. des Aggregates. Weitere Funktionen werden von den bekannten Lagern nicht übernommen. Bekannt sind auch Aggregate-Lager, die mit sog. Wegbegrenzern versehen sind. Bekanntermaßen bestehen nämlich die Aggregate-Lager aus zwei bis zu einem gewissen Ausmaß gegeneinander beweglichen Bauelementen (oder Anschlüssen), wobei das erste Bauelement, das bspw. als Gehäuse des Lagers fungiert, bspw. an der Karosserie oder an einer Karosserie-Tragstruktur eines Kraftfahrzeugs befestigt ist, während das als sog. Lagerkern fungierende zweite Bauelement des Aggregate-Lagers bspw. an den Motor des Kraftfahrzeugs angeflanscht wird. Um nun im Betrieb, wenn der Motor des Kraftfahrzeugs gegenüber dessen Karosserie geringfügig schwingt und somit auch das zweite Bauelement des Lagers gegenüber dessen erstem Bauelement gewisse (Schwing)-Bewegungen ausführt, sicherzustellen, dass die Amplituden oder Ausschläge dieser Bewegungen nicht zu groß werden, können die beiden genannten Bauelemente oder Anschlüsse des Lagers über einen sog. Wegbegrenzer miteinander verbunden sein. Relativ einfach ausgebildet sein kann dieser Wegbegrenzer bspw. in Form eines Stahlseils, das mit seinen Enden am ersten bzw. zweiten Bauelement angebunden ist, so wie dies bspw. in der US 4,854,562, von der die vorliegende Erfindung gemäß oberbegriff des Anspruchs 1 ausgeht, gezeigt ist.

An einem Kraftfahrzeug kann es weiterhin erforderlich sein, einen elektrischen Stromkreis zu schließen, d.h. es ist bspw. erforderlich, daß vom Motor des Kraftfahrzeugs ausgehend ein Massekabel mit der Karosserie verbunden ist. Die Verwendung eines separaten Massekabels bedingt jedoch zusätzliche Kosten hinsichtlich der Logistik und der Montage, da eine Verschraubung des Massekabels motorseitig und karosserieseitig erfolgen muß.

Aufgabe der Erfindung ist es, ein Lager zur Abstützung eines schwingungsfähigen Aggregates zu schaffen, durch das die Montagekosten verringert werden.
Diese Aufgabe wird bei einem Lager nach dem Oberbegriff des Anspruchs 1 dadurch gelöst, dass der zumindest eine Stromleiter eine ausreichende Elastizität oder eine entsprechende Länge aufweist, um die Bewegungen des Lagers bei Schwingungseinfluss zerstörungsfrei mitmachen zu können, ohne dabei als Bewegungs-Anschlag oder Wegbegrenzung zu wirken.

Das erfindungsgemäße Lager kombiniert in vorteilhafter Weise die Funktionen Lagerung und elektrische Leitfähigkeit. Das erfindungsgemäße Lager besteht aus mindestens einem elektrisch leitfähigen Anschluß zu einem Aggregat, dessen Schwingungen gedämpft werden sollen. An diesen aggregatseitigen Anschluß schließt sich ein zur Dämpfung dienendes Bauteil an, das direkt oder über mindestens ein Zusatzbauteil mit mindestens einem elektrisch leitfähigen Anschluß verbunden ist, wobei dieser Anschluß an einem das Lager und damit das Aggregat tragenden und die Schwingungen des Aggregates aufnehmenden Bauteil befestigt ist. Zwar ist es aus dem Stand der Technik (vgl. die bereits genannte US 4,854,562) bereits bekannt, ein Stahlseil und somit einen elektrischen Stromleiter zwischen den beiden Anschlüssen bzw. Bauelementen eines Aggregate-Lagers vorzusehen, jedoch dient im bekannten Stand der Technik dieses Stahlseil wie bereits erläutert als Wegbegrenzer und nicht als Stromleiter. Ein erfindungsgemäßer Stromleiter an einem Aggregate-Lager hingegen dient nur als Stromleiter und nicht als Wegbegrenzer, weshalb - wie angegeben - der zumindest eine Stromleiter eine ausreichende Elastizität oder eine entsprechende Länge aufweist, um die Bewegungen des Lagers bei Schwingungseinfluss zerstörungsfrei mitmachen zu können, ohne dabei als Bewegungs-Anschlag oder Wegbegrenzung zu wirken.

Die elektrische Verbindung zwischen dem aggregatseitigen Anschluß und dem Anschluß zum Trag-Bauteil kann in vorteilhafter Weise durch separate Stromleitungen oder dergleichen und/oder durch im Dämpfungsbauteil des Aggregate-Lagers integrierte leitfähige Mittel erfolgen. In einer vorteilhaften Ausführungsform wird das nicht oder nicht ausreichend leitfähige Dämpfungsbauteil, das in der Regel aus Gummi oder einem Elastomer besteht, durch die Beimischung leitfähiger Substanzen elektrisch leitfähig gemacht. Bei einem Hydrolager, das neben dem elastomeren Dämpfungsbauteil in einem Hohlraum ein Fluid, insbesondere eine Hydraulikflüssigkeit, aufweist, ist es von Vorteil, wenn dieses Fluid durch die Beimischung leitfähiger Substanzen elektrisch leitfähig wird.

Neben der Beimischung pulverförmiger oder flüssiger, leitfähiger Substanzen ist es in vorteilhafter Weise möglich, mindestens einen Stromleiter wie ein leitfähiges Seil oder ein Band oder einen Draht oder ein leitfähiges Geflecht oder Gewebe in dem Lager so anzuordnen, daß die beiden elektrisch voneinander getrennten Anschlüsse durch die genannten Maßnahmen elektrisch miteinander verbunden sind. Die genannten Stromleiter können vorteilhafterweise an der Außenoberfläche oder innerhalb des Lagers angeordnet sein. Innerhalb des Lagers ist eine integrierte Anordnung der Stromleiter in das feste Dämpfungsbauteil möglich. In einer anderen vorteilhaften Ausführungsform kann insbesondere bei einem Hydrolager der Stromleiter zumindest teilweise an der Innenoberfläche des festen Dämpfungsbauteils oder benachbart dazu verlaufen. Die elektrischen Stromleiter weisen eine ausreichende Elastizität oder eine entsprechende Länge auf, um die Bewegungen des Lagers bei Schwingungseinfluß zerstörungsfrei mitmachen zu können. In einer vorteilhaften Ausführungsform kann der Stromleiter aus einem Seil und/oder einem Band und/oder einem Gewebe und/oder einem Geflecht bestehen.

In einer vorteilhaften Ausführungsform ist der Stromleiter als eine Kapsel oder Kappe ausgebildet, die zumindest einen im wesentlichen U-förmigen Querschnitt aufweist. Dieser Stromleiter dient durch eine entsprechende Auswahl eines geeigneten Materials zusätzlich als Wärmeschutz. Je nach Anwendungsfall verhindert diese leitende Wärmeschutzkappe einen Wärmefluß in das Lager oder die Wärmeschutzkappe dient als Oberflächenvergrößerung, so daß die im Lager entstehende Wärme leichter nach außen abfließen kann.

Ausführungsformen der Erfindung werden nachstehend anhand der Zeichnungen beispielshalber beschrieben. Dabei zeigen:
- Figur 1: einen Längsschnitt durch ein teilweise dargestelltes Hydrolager, bei dem das Dämpfungsbauteil durch die Beimischung von leitfähigen Substanzen elektrisch leitend ist,
- Figur 2: einen Längsschnitt eines teilweise dargestellten Hydrolagers, bei dem die im Hydrolager befindliche Hydraulikflüssigkeit stromleitend ist,
- Figur 3: einen Längsschnitt durch ein teilweise dargestelltes Hydrolager, bei dem innerhalb des Dämpfungsbauteils und an der Innenfläche des Dämpfungsbauteils jeweils ein Stromleiter angeordnet ist,
- Figur 4: einen Längsschnitt durch ein teilweise dargestelltes Hydrolager, bei dem der Strom durch einen an der Außenoberfläche des Hydrolagers befestigten Stromleiters fließt,
- Figur 5: einen Längsschnitt durch ein teilweise dargestelltes Hydrolager, bei dem das Hydrolager von einer an einem Ende offenen Wärmeschutzkappe umgeben ist, die elektrisch leitfähig ist.

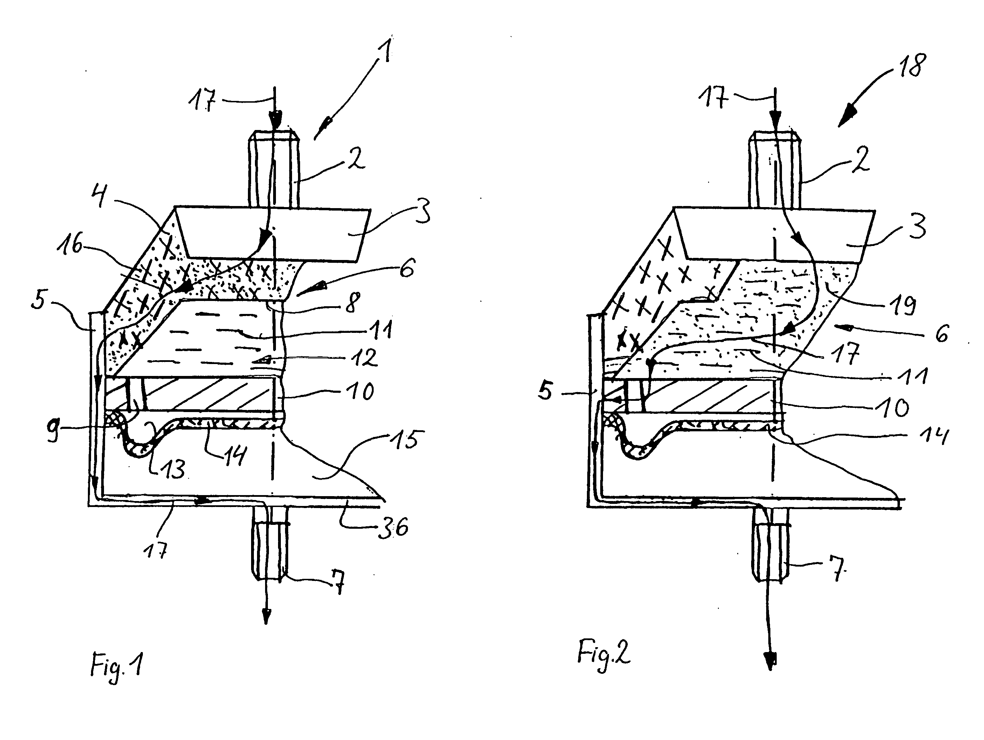

Die Figur 1 zeigt ein Lager 1, das als Hydrolager ausgebildet ist. Das Lager 1 weist einen mit einem Gewinde versehenen Anschluß 2 auf, der aus einem leitfähigen Material, wie z. B. Stahl, besteht. Der Anschluß 2 ist an einem Lagerkern 3 befestigt, der aus dem gleichen oder einem anderen leitfähigen Material wie der bolzenförmige Anschluß 2 besteht. An dem Anschluß 2 ist ein Aggregat, beispielsweise ein nicht dargestellter Motor, befestigt. Mit dem Lagerkern 3 ist ein Tragkörper 4 verbunden, der aus einem dämpfenden Material, wie beispielsweise Gummi oder einem Elastomer, hergestellt ist. Der Tragkörper 4 ist an einem Gehäuse 5 aus einem leitfähigen Material angeordnet. An einer Bodenseite 36 des Gehäuses 5 ist ein weiterer Anschluß 7 aus einem leitfähigen Material ausgebildet. Zwischen einer Innenfläche 8 des Tragkörpers 4 und einem mit Öffnungen 9 versehenen Abschlußteil 10 ist ein mit einer Hydraulikflüssigkeit 11 gefüllter Innenraum 12 ausgebildet. Durch die Öffnungen 9 kann die Hydraulikflüssigkeit 11 in einen unterhalb des Abschlußteiles 10 ausgebildeten Ausgleichraum 13 strömen, der durch eine Membran oder einen Rollbalg 14 begrenzt ist. Unterhalb des Rollbalges 14 befindet sich ein weiterer Raum 15, der so bemessen ist, daß sich der Rollbalg 14 ausreichend bewegen kann.

Das Dämpfungsbauteil 6 besteht bei einem Hydrolager aus dem Tragkörper 4 und der in dem Hohlraum oder Innenraum 12 befindlichen Hydraulikflüssigkeit 11. In das elastische und dämpfende Material des Tragkörpers 4 ist eine leitfähige Substanz 16 eingemischt, durch die der Tragkörper 4 elektrisch leitfähig ist. Diese leitfähige Substanz 16 kann beispielsweise ein Pulver und/oder Körner und/oder Späne oder dergleichen sein. Durch eine mit Pfeilen versehene Linie 17 ist ein Stromfluß symbolisch dargestellt, wobei der elektrische Strom in den Anschluß 2 hineinfließt und über den Lagerkem 3, den Tragkörper 4, das Gehäuse 5 in den Anschluß 7 und aus diesem heraus fließt.

Die Figur 2 zeigt ein ebenfalls als Hydrolager ausgebildetes Lager 18, das die gleichen Bauteile wie das Lager 1 der Figur 1 aufweist. Diese Bauteile weisen entsprechend die gleichen Bezugszeichen auf. Im Unterschied zum Lager 1 der Figur 1 ist die in dem Innenraum 12 befindliche Hydraulikflüssigkeit 11 durch den Zusatz einer geeigneten flüssigen oder pulvrigen Substanz 19 elektrisch leitend. Der Strompfad ist durch eine mit Pfeilen versehene Linie 17 symbolisch gekennzeichnet, wobei der Strom nunmehr durch die Hydraulikflüssigkeit 11 fließt.

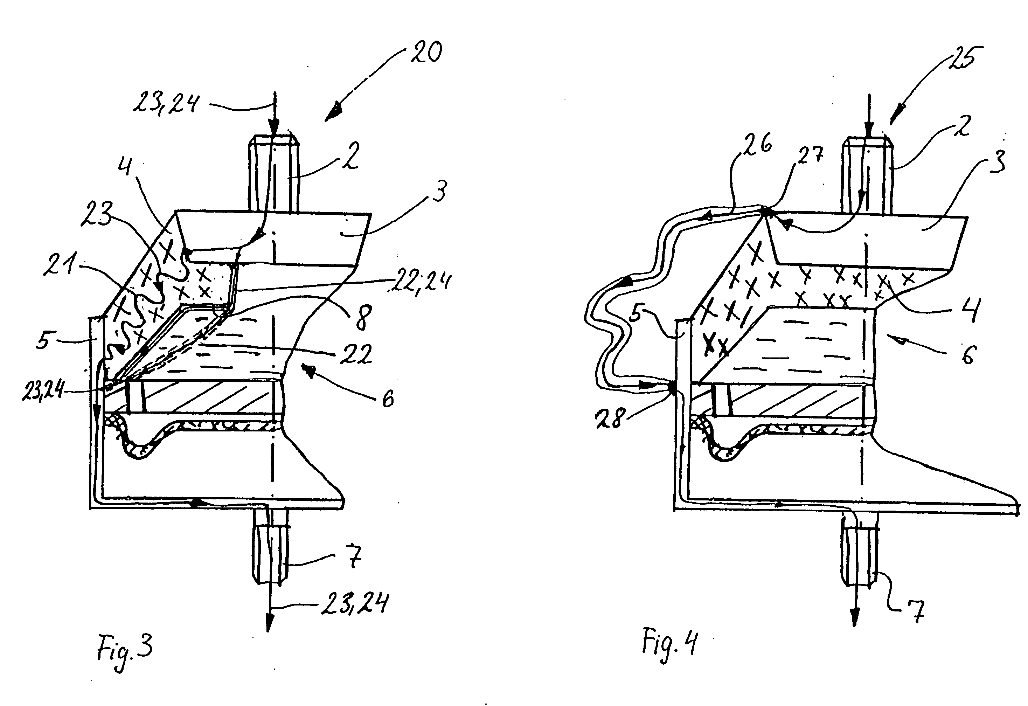

Die Figur 3 zeigt ein als Hydrolager ausgebildetes Lager 20, das im wesentlichen mit dem Lager 1 übereinstimmt und bei dem die gleichen Bauteile mit den gleichen Bezugszeichen versehen sind. Bei dem Lager 20 ist in dem Tragkörper 4 mindestens ein Stromleiter 21 in Form eines Seiles und/oder Bandes und/oder Drahtes integriert. Zusätzlich oder alternativ dazu ist an der Innenfläche 8 des Tragkörpers 4 ein weiterer Stromleiter 22 angeordnet, der aus einem Gewebe und/oder einem Geflecht besteht. Der Stromleiter 22 ist entweder direkt an der Innenfläche 8 des Tragkörpers 4 und/oder beabstandet dazu entsprechend der vorhandenen Dehnfähigkeit angeordnet, wie dies in strichlierten Linien in der Figur 3 dargestellt ist. In der in der Figur 3 gezeigten Ausführungsform fließt ein Strom sowohl über den Stromleiter 21 als auch den Stromleiter 22. Die Strompfade 23 und 24 sind durch mit Pfeilen versehene Linien symbolisiert.

Die Figur 4 zeigt ein Lager 25, das als Hydrolager ausgebildet ist. Das Lager 25 weist die gleichen Bauteile wie das Lager 1 auf, die entsprechend mit den gleichen Bezugszeichen versehen sind. Am Lagerkern 3 des Lagers 25 ist ein Stromleiter 26 mit seinem einen Ende 27 angeschlossen, wobei das andere Ende 28 des Stromleiters 26 an dem Gehäuse 5 leitend befestigt ist. In einer nicht dargestellten Ausführungsform kann der Stromleiter 26 am Anschluß 2 und/oder am Anschluß 7 angeschlossen sein. Die Länge des Stromleiters 26 ist so bemessen, daß der Stromleiter 26 die im Betrieb auftretenden Bewegungen des Lagers 25 zerstörungsfrei mitmachen kann.

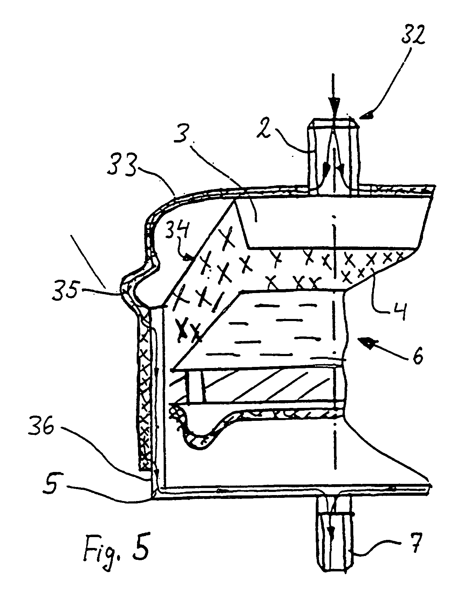

Die Figur 5 zeigt ein Lager 32, das als ein Hydrolager ausgebildet ist und im wesentlichen aus den gleichen Bauteilen wie das Lager 1 besteht. Die gleichen Bauteile sind entsprechend mit den gleichen Bezugszeichen wie beim Lager 1 versehen. Bei dem Lager 32 umgibt eine Kappe 33 aus einem elektrisch leitfähigen Material die Außenoberfläche 34 des Lagers 32. Das Material der Kappe 33 hat gleichzeitig einen wärmeisolierenden Effekt, so daß die Kappe 33 zusätzlich als Schutz vor einer von außen auf das Lager 32 wirkenden Wärme dient. In einer anderen Ausführungsform ist das elektrisch leitfähige Material der Kappe 33 so ausgelegt, daß die Kappe 33 zur Oberflächenvergrößerung dient, so daß die im Lager 32 erzeugte Wärme besser an die Umgebung abgegeben werden kann. Die Kappe 33 der in der Figur 5 gezeigten Ausführungsform deckt im wesentlichen die Außenoberflächen des Anschlusses 2 sowie des Tragkörpers 4 als auch die Umfangsfläche 36 des Gehäuses 5 ab. Zusätzlich ist in der Kappe 33 mindestens eine Ringwulst 35 ausgebildet, deren Größe entsprechend den Bewegungen des Lagers 32 im Betrieb ausgelegt ist.

## Patentansprüche

1. Lager zur Abstützung eines schwingungsfähigen Aggregates, insbesondere eines Motors und/oder eines Getriebes an einer Karosserie eines Kraftfahrzeuges, wobei das Lager (1, 18, 20, 25, 32) relativ starre, elektrisch leitfähige Anschlüsse (2, 7) zur Befestigung der daran zu verbindenden Bauteile aufweist, sowie mit einem zwischen den Anschlüssen (2, 7) ausgebildeten Dämpfungsbauteil, wobei die Anschlüsse (2, 7) des Lagers (1, 18, 20, 25, 32) über einen elektrischen Strom-Leiter (21, 22, 26, 33, 16, 19) miteinander verbunden sind,
**dadurch gekennzeichnet, dass** der zumindest eine Stromleiter (21, 22, 26, 33, 16, 19) eine ausreichende Elastizität oder eine entsprechende Länge aufweist, um die Bewegungen des Lagers bei Schwingungseinfluss zerstörungsfrei mitmachen zu können, ohne dabei als Bewegungs-Anschlag oder Wegbegrenzung zu wirken.

2. Lager nach Anspruch 1,
**dadurch gekennzeichnet, dass** der Stromleiter (21, 22, 26) in Form eines Seiles oder Bandes ausgebildet ist.

3. Lager nach Anspruch 1 oder 2,
**dadurch gekennzeichnet, dass** in einem insbesondere elastomeren Tragkörper (4) des Lagers (20) und/oder an der Innenoberfläche (8) dieses Tragkörpers (4) zumindest ein Stromleiter (21, 22) angeordnet ist, über den die Anschlüsse (2, 7) elektrisch verbunden sind.

4. Lager nach Anspruch 3, **dadurch gekennzeichnet, daß** der Stromleiter (22) ein flächiges Gebilde ist, das an der Innenoberfläche (8) des Tragkörpers (4) anliegt oder benachbart dazu angeordnet ist.

5. Lager nach einem der vorstehenden Ansprüche, **dadurch gekennzeichnet, dass** am Anschluß (2) oder an einem mit diesem elektrisch leitend verbundenen Lagerkern (3) des Lagers (25) zumindest ein Stromleiter (26) mit seinem einen Ende (27) angeschlossen ist, der am anderen Anschluß (7) oder einem mit diesem Anschluß (7) in leitender Verbindung stehenden Bauteil (5) mit seinem anderen Ende (28) befestigt ist.

6. Lager nach einem der vorstehenden Ansprüche, **dadurch gekennzeichnet, dass** über die Außenoberfläche (34) des Lagers (32) eine elektrisch leitfähige Kappe (33) gestülpt ist, die den einen Anschluß (2) mit dem anderen Anschluß (7) elektrisch verbindet und dass die Kappe (33) gleichzeitig als Wärmeisolation oder zur Wärmeabgabe dient.

7. Lager nach Anspruch 6, **dadurch gekennzeichnet, dass** die Kappe (33) mindestens einen Ringwulst (35) oder dergleichen oder besonders dehnfähige Abschnitte aufweist, durch die die am Lager (32) befestigte Kappe (33) die auftretenden Bewegungen des Lagers (32) ausgleicht.

8. Lager nach Anspruch 1, **dadurch gekennzeichnet, dass** ein Tragkörper (4) des Dämpfungsbauteils (6) und /oder eine im Lager (18) befindliche Hydraulikflüssigkeit (11) elektrisch leitfähig ist, wobei die elektrische Leitfähigkeit des Tragkörpers (4) und/oder der Hydraulikflüssigkeit (11) durch die Beimischung leitfähiger Substanzen (16, 19) hergestellt ist.

## Claims

1. A mounting for supporting a vibrating power unit, especially of an engine and/or a transmission on a motor vehicle body, wherein the mounting (1, 18, 20, 25, 32) has relatively rigid, electrically conductive terminals (2, 7) for fastening the components to be connected thereon, and comprising a damping component formed between the terminals (2, 7), the terminals (2, 7) of the mounting (1, 18, 20, 25, 32) being connected to one another via an electric power conductor (21, 22, 26, 33, 16, 19), **characterised in that** the at least one power conductor (21, 22, 26, 33, 16, 19) has sufficient elasticity or a corresponding length to be able to also carry out the movements of the mounting without destruction in the event of vibrational influence, without in the process acting as a movement stop or path limitation.

2. A mounting according to claim 1, **characterised in that** the power conductor (21, 22, 26) is designed in the form of a cable or band.

3. A mounting according to claim 1 or 2, **characterised in that** arranged in an, in particular, elastomeric carrying element (4) of the mounting (20) and/or on the inner surface (8) of this carrying element (4) is at least one power conductor (21, 22), via which the terminals (2, 7) are electrically connected.

4. A mounting according to claim 3, **characterised in that** the power conductor (22) is a flat configuration which rests on the inner surface (8) of the carrying element (4) or is arranged adjacent thereto.

5. A mounting according to any one of the preceding claims, **characterised in that,** connected by its one end (27) to the terminal (2) or to a mounting core (3) of the mounting (25) which is electrically conductively connected to this terminal (2), is at least one power conductor (26) which is fastened by its other end (28) to the other terminal (7) or to a component (5) which is in conductive connection with this terminal (7).

6. A mounting according to any one of the preceding claims, **characterised in that** an electrically conductive cap (33) is placed over the outer surface (34) of the mounting (32), the cap (33) electrically connecting the one terminal (2) to the other terminal (7), and **in that** the cap (33) is simultaneously used for heat insulation or heat loss.

7. A mounting according to claim 6, **characterised in that** the cap (33) has at least one annular bead (35) or the like or has particularly extensible portions by means of which the cap (33) fastened to the mounting (32) compensates the movements of the mounting (32) which occur.

8. A mounting according to claim 2, **characterised in that** a carrying element (4) of the damping component (6) and/or a hydraulic fluid (11 ) located in the mounting (18) is electrically conductive, the electric conductivity of the carrying element (4) and/or of the hydraulic fluid (11) being produced by adding conductive substances (16, 19).

## Revendications

1. Support pour une unité motrice vibratoire, notamment pour un moteur et/ou une boîte de vitesse à une carrosserie de véhicule, le support (1, 18, 20, 25, 32) présentant des raccords (2, 7) relativement rigides, électriquement conducteurs, pour la fixation des éléments à y raccorder, ainsi qu'un élément amortisseur formé entre les raccords (2,7), les raccords (2,7) du support (1, 18, 20, 25, 32) étant raccordés entre eux à l'aide d'un conducteur électrique (21, 22, 26, 33, 16, 19),
**caractérisé en ce qu'**
au moins l'un des conducteurs (21, 22, 26, 33, 16, 19) présente une élasticité suffisante ou une longueur correspondante pour pouvoir suivre les mouvements du support sans détérioration en cas d'influence vibratoire sans agir comme une butée de mouvement ou limitation de course.

2. Support selon la revendication 1,
**caractérisé en ce que**
le conducteur (21, 22, 26) est formé comme un câble ou une bande.

3. Support selon la revendication 1 ou 2,
**caractérisé en ce qu'**
au moins un conducteur (21, 22) est disposé dans un corps porteur (4) notamment en élastomère du support (20) et/ou sur la surface intérieure (8) de ce corps porteur (4), à l'aide duquel conducteur les raccords (2, 7) sont raccordés électriquement.

4. Support selon la revendication 3,
**caractérisé en ce que**
le conducteur (22) est une entité plate qui est collée à la surface intérieure (8) du corps porteur (4) ou y est disposée de manière adjacente.

5. Support selon l'une quelconque des revendications précédentes,
**caractérisé en ce qu'**
au moins un conducteur (26) est raccordé par l'une de ses extrémités (27) au raccord (2) ou à un noyau de support (3) du support (25) raccordé électriquement de manière conductrice à ce raccord, son autre extrémité (28) étant fixée à l'autre raccord (7) ou à un élément (5) en connexion électrique avec ce raccord (7).

6. Support selon l'une quelconque des revendications précédentes,
**caractérisé en ce qu'**
un capuchon (33) électriquement conducteur est placé sur la surface extérieure (34) du support (32), lequel capuchon raccorde électriquement un raccord (2) à l'autre raccord (7), et le capuchon (33) sert en même temps d'isolation thermique ou pour l'émission de chaleur.

7. Support selon la revendication 6,
**caractérisé en ce que**
le capuchon (33) présente au moins un bourrelet annulaire (35) ou similaire ou des sections particulièrement extensibles, par lesquels le capuchon (33) fixé au support (32) compense les mouvements produits par le support (32).

8. Support selon la revendication 1,
**caractérisé en ce qu'**
un corps porteur (4) de l'élément amortisseur (6) et/ou un fluide hydraulique (11) se trouvant dans le support (18) est électriquement conducteur, la conductibilité électrique du corps porteur (4) et/ou du fluide hydraulique (11) étant créée par le mixage de substances conductrices (16, 19).
